# EUROPÄISCHE PATENTSCHRIFT

(11) **EP 1 558 465 B1**
(45) Veröffentlichungstag und Bekanntmachung des Hinweises auf die Patenterteilung: **22.11.2006**
(21) Anmeldenummer: 03809738.2
(22) Anmeldetag: 29.10.2003
(51) Int. Cl.: B60Q 3/02

(54) **EINRICHTUNG ZUR STEUERUNG EINER BELEUCHTUNG, INSBESONDERE FÜR FAHRZEUGINNENRÄUME SOWIE VERFAHREN ZU IHRER STEUERUNG**
DEVICE FOR CONTROLLING LIGHTING, ESPECIALLY INSIDE THE PASSENGER COMPARTMENTS OF VEHICLES AND CONTROL METHOD THEREFOR
DISPOSITIF DE COMMANDE D'UN ECLAIRAGE DESTINE NOTAMMENT A L'HABITACLE DE VEHICULES AUTOMOBILES ET SON PROCEDE DE FONCTIONNEMENT

(30) Priorität: 31.10.2002 DE 10251133
(43) Veröffentlichungstag der Anmeldung: 03.08.2005
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2003/011971
(87) Internationale Veröffentlichungsnummer: WO 2004/039631

(56) Entgegenhaltungen:
- EP-A- 0 722 262
- EP-A- 1 097 842
- CH-A- 671 821
- DE-A- 10 022 321
- DE-A- 19 921 285
- DE-U- 29 822 554
- US-A- 5 372 545
- PATENT ABSTRACTS OF JAPAN vol. 1997, no. 06, 30. Juni 1997 (1997-06-30) & JP 09 048279 A (NILES PARTS CO LTD), 18. Februar 1997 (1997-02-18)
- PATENT ABSTRACTS OF JAPAN vol. 017, no. 555 (M-1492), 6. Oktober 1993 (1993-10-06) & JP 05 155290 A (MAZDA MOTOR CORP), 22. Juni 1993 (1993-06-22)
- PATENT ABSTRACTS OF JAPAN vol. 1997, no. 02, 28. Februar 1997 (1997-02-28) & JP 08 273838 A (MATSUSHITA ELECTRIC WORKS LTD), 18. Oktober 1996 (1996-10-18)

## Beschreibung

Die Erfindung betrifft eine Einrichtung zur Steuerung einer Beleuchtung, insbesondere für Fahrzeuginnenräume nach dem Oberbegriff des Anspruches 1 sowie ein Verfahren zu ihrer Steuerung nach dem Oberbegriff des Anspruches 9.

Lampen strahlen in der Regel Licht aus, wenn ein Schalter geschlossen wird. Dabei leuchtet die Lampe in eine vorgegebene Richtung, z.B. bei einer Tischbeleuchtung vorzugsweise nach unten, bei einer Wandbeleuchtung z.B. schräg in den Raum usw. Wird bei mehreren Lampen eine geänderte Beleuchtung gewünscht, müssen normalerweise weitere Schalter geschlossen, bzw. geöffnet werden, um Lampen ein- bzw. auszuschalten.

Eine solche Anordnung ist im Bereich der Beleuchtungen für Lampen mit unterschiedlichen Vorzugsrichtungen z.B. aus der Kfz-Innenraumbeleuchtung bekannt. Schräg vorne zwischen Fahrer und Beifahrer befindet sich ein Innenleuchtenbereich mit mehreren, oft genau voneinander abgegrenzten Leuchtrichtungen. Die Auswahl der Leuchtrichtung "Beifahrer" z. B. soll verhindern, das der Fahrer während der Fahrt geblendet wird. Dazu wird eine Lampe aktiviert, deren Vorzugsrichtung zum Beifahrer zeigt, damit er z. B. während einer Nachtfahrt eine Straßenkarte lesen kann, ohne dass der Fahrer gestört wird. Oft ist eine weitere Beleuchtungsart vorgesehen, die mit erweitertem Leuchtwinkel den Bereich zwischen Fahrer und Beifahrer ausleuchtet. Außerdem ist in der Regel die Beleuchtungsrichtung "Fahrer" analog zur Beleuchtungsrichtung "Beifahrer" vorhanden.

Bisher wird das Aktivieren dieser Beleuchtungseinrichtungen mittels mechanischer Schalter gelöst. Aus ergonomischen Gründen befinden sich die Schalter in unmittelbarer Nähe der Leuchtmittel, also im KFZ im sogenannten "Dachhimmel". Zur Aktivierung ist es deshalb notwendig, einen der genannten Schalter oberhalb des Kopfes zu bedienen. Hierzu wird ein guter Tastsinn benötigt, meist muss der Fahrer während der Schalterbedienung jedoch zur Beleuchtungseinrichtung sehen. Das lenkt den Fahrer von seiner Konzentration auf die Strasse ab.

Aus der dem Oberbegriff der unabhängigen Ansprüche zu Grunde liegenden DE 298 22 554 U1 ist eine Vorrichtung bekannt, die mittels Bilderfassung Leuchtmittel an einen durch eine Bewegung geänderten Beleuchtungsbedarf anpasst. Hierzu ist eine Bild erfassende Aufnahmeeinheit in Form eines Kamerasensors vorgesehen. Die aufgenommenen Bilder werden einem Differenzwertbildner übergeben, der aufgrund der Differenz zwischen auf einander folgenden Bildern erkennt, ob sich ein Körper bewegt hat und diesem das Licht richtungsabhängig nachführt. Zur Beeinflussung des Lichtkegels der Lichtquelle können auch Stellmittel vorgesehen werden, die bei einer Bewegung des Körpers das Licht dadurch nachführen, dass der Lichtkegel begrenzt erweitert wird. Dies führt zwar zu einer Verringerung der Lichtintensität, ist aber keine Nachführung der Amplitude und ggf. der Richtung des Lichts in Abhängigkeit eines vom Sensor erkannten Bewegungsmusters des Körpers, wie es z. B. bei einem Dimmen des Lichts infolge der Bewegung einer Hand erfolgen kann. Die Verwendung Bild erfassender Mittel mit nachfolgender Bildverarbeitung macht das System zudem sehr aufwändig.

Aus der älteren, nachveröffentlichten Patentanmeldung EP 1 408 276 A2 ist es bekannt, mehrere Lichtquellen über eine Steuerungseinheit so anzusteuern, dass eine aus mehreren Lichtquellen bestehende Beleuchtungseinrichtung ein- oder mehrdimensional z.B. der Bewegung wenigstens einer Person nachgeführt wird. Dazu sind Sensoren vorgesehen, welche die Bewegung, jedoch nicht ein Bewegungsmuster der Person erfassen. Je nach dem, wo die Sensoren Signale liefern, dass eine Person vorhanden ist, wird die Beleuchtungseinrichtung so beeinflusst, dass um die Person eine Lichtinsel entsteht. Dies erfolgt dadurch, dass die Lichtquellen in ihrer Amplitude geregelt werden, so dass z.B. Lichtquellen, die in Bewegungsrichtung der Person vor ihr liegen stufenlos in ihrer Amplitude hochgeregelt werden, während die hinter der Person liegenden Lichtquellen heruntergeregelt werden. Es erfolgt eine Nachführung von Licht mit der Person, jedoch nicht in Richtung auf die Person.

Aus der DE 196 53 682 ist eine Steuervorrichtung bekannt, die Einrichtungen zur Beeinflussung der Verhältnisse in einem funktional aufgegliederten Raum in Abhängigkeit der Position und Verweilzeit eines Auslösers wie einer Person steuert. Eine derartige Einrichtung kann auch eine Beleuchtung sein. Bevorzugter Einsatzbereich ist jedoch z. B. die Informationsvermittlung in Museen oder im Rahmen einer Multimediashow. Das Wort "Bewegungsmuster" taucht in Spalte 3, Zeilen 1-5 zwar auf, wie jedoch das Bewegungsmuster auf welche Einheit einwirkt, bleibt auf Grund der Betonung der Verweilzeit zur Steuerung der Einrichtung als auch der funktionalen Zergliederung des Raums offen.

Aus der US 5,326,028 A ist eine Positions- und Bewegungserfassung von in einem Raum befindlichen Flächen bzw. Personen bekannt. Belüftung, aber auch Beleuchtung werden an den Bedarf im Raum angepasst, wobei durch eine Reflexionsmessung Änderungen im Raum, wie z. B. auch der Standort von Personen wahrgenommen werden. Besondere Bewegungen oder Bewegungsabläufe werden nicht berücksichtigt, stattdessen wird der gesamte Raum mit Spotlights abgetastet.

Aus der DE 197 37 761 A1 ist ein Überwachungssystem bekannt, bei dem ein erster Bewegungsmelder eine Bewegung eines Objekts erfasst und in Abhängigkeit der erfassten Bewegung einen Lichtstrahl eines zweiten Systems dem sich bewegenden Objekt nachführt. Die Erfassung bestimmter Bewegungsmuster ist nicht vorgesehen.

In der US 6,137,042 wird einer bestimmten Bewegung oder Annäherung eines Benutzers ein bestimmtes Klang- oder Lichterlebnis zugeordnet, das mittels eines Computers abgespielt wird. Licht kann zwar auch in seiner Amplitude beeinflusst werden, es werden jedoch keine bestimmten Abläufe an bestimmte Bewegungsmuster gekoppelt.

Aus der Patentanmeldung DE 199 52 795 A1 ist eine Vorrichtung bekannt, bei der das Innenlicht nur durch Annäherung der Hand an die Innenleuchte eines Kraftfahrzeugs eingeschaltet wird. Dies erspart das "Suchen" nach dem Lichtschalter und stellt somit eine Verbesserung der Fahrsicherheit dar. Als weiterer Vorteil kann der Wegfall von mechanischen Schaltern und die dadurch entstehende Designfreiheit genannt werden. Diese Anordnung ist jedoch schwierig zu bedienen, wenn mehr als eine Leuchtrichtung gewählt wird. Dann muss der Fahrer wieder seinen Blick der Beleuchtungseinrichtung zuwenden, um die Hand der richtigen Lampe zu nähern und damit die gewünschte Lichtrichtung zu erzielen. (siehe DE 42 32 972 C2 für weitere Beleuchtungen im Fahrzeug)

Zum Dimmen von Beleuchtungen sind berührungslose Dimmer-Schalter an sich z.B. aus der DE 40 03 581 A1 bekannt, die z.B. die Reflexion einer sich annähernden Hand auswerten. Eine entsprechende Lösung mit einer Lichtschranke ist aus der DE 198 12 555 A1 bekannt, bei der ein kurzes Unterbrechen des Lichtgangs zum Ein- und Ausschalten und ein längeres Unterbrechen zum Dimmen führt. Eine intuitive Bedienung ist damit nicht gewährleistet.

Aus der älteren Patentanmeldung DE 101 33 823.6 ist eine Sensoranordnung zur Bestimmung der Position eines Körpers, z. B. eines Fingers in allen drei Raumebenen bekannt. Mit einer solchen Sensoranordnung kann die Position einer Handbewegung nach links oder rechts, bzw. nach vorne oder nach hinten bestimmt werden. Gleichzeitig kann dieser Sensor die Entfernung der Hand bestimmen. Bei Anwendung einer solchen Sensoranordnung ist selbstverständlich die Anzahl der möglichen Beleuchtungsrichtungen frei bestimmbar.

Aus der europäischen Patentanmeldung EP 706 648 A1 ist ein optisches System zur Detektion einer Änderung in der Reflexion an einem Gegenstand bekannt, bei dem Fremdlichtänderungen keinen Einfluss auf den gemessenen Wert ausüben. Das dortige System wird im Wesentlichen als Scheibenwischersensor zur Erfassung der auf einer Windschutzscheibe auftreffenden Regentropfen verwendet, kann jedoch ebenso als Näherungssensor benutzt werden. Dort werden zwei Messstrecken zwischen Sendelement und Empfangselement aufgebaut. Während das Sendeelement die Strahlung aussendet, ermittelt das Empfangselement die an Oberflächen oder Gegenständen reflektierte Rückstrahlung. Die beiden Messstrecken werden über einen Taktgenerator zeitabschnittsweise betrieben. Die vom Empfangselement ermittelten Detektionssignale werden in einem vom Taktgenerator angesteuerten Synchrondemodulator wieder in den einzelnen Messstrecken zuordenbare Signale zerlegt. Das durch Vergleichen der Messstrecken ermittelte Nutzsignal wird einer Auswerteeinheit zugeleitet. Findet auf beiden Messstrecken eine gleichmäßige Reflexion statt, so ergibt sich ein Nutzsignal zu Null. Das Nutzsignal wird einer Signalzentrierstufe zugeführt. Je nach dem, ob an deren Ausgang eine Regelspannung anliegt oder nicht, wird mit dieser Regelspannung die in die Messstrecken eingestrahlte Strahlungsmenge geregelt, so dass sich eine Rückregelung des Detektionssignals zu Null ergibt. Damit ist es möglich, Änderungen bei gleichzeitiger zuverlässiger Fremdlichtkompensation zu erfassen.

Ausgehend von diesem Stand der Technik liegt der vorliegenden Erfindung die Aufgabe zugrunde, eine Einrichtung zur Steuerung einer Beleuchtung mit einfacher und intuitiver Bedienung zu schaffen, die bedarfsweise auch blind bedient werden kann. Ferner soll auch ein Verfahren zur Steuerung dieser Einrichtung geschaffen werden.

Diese Aufgabe wird mit einer Einrichtung mit den Merkmalen des Anspruches 1 oder mit einem Verfahren mit den Merkmalen des Anspruches 9 gelöst.

Ein Sensor nimmt dabei wenigstens die Position eines Körpers im sensoraktiven Bereich - und ggf. auch die Annäherung des Körpers - wahr und entscheidet mit einer Steuereinheit nicht nur, ob die entsprechende Lichtquelle ein- oder ausgeschaltet wird, sondern auch in welche Richtung das von dieser Lichtquelle bereitgestellte Licht abgestrahlt wird. Da die Wirkrichtung in Richtung des sich entfernenden Körpers gelenkt wird, ergibt sich eine einfache und intuitive Steuerung. Bei mehreren Leuchtrichtungen wird damit Licht in der gewünschten Richtung nachgeführt. Es ist aber auch möglich, das Licht in der Amplitude in Abhängigkeit der Position bzw. des Abstands des Körpers und damit in der Intensität nachzuführen, so dass sich ein berührungsloses Dimmen ergibt.

Weitere Vorteile ergeben sich aus den Unteransprüchen.

Im Folgenden wird die Erfindung an Hand der beigefügten Figuren an einem Ausführungsbeispiel näher erläutert. Es zeigen:
- Fig. 1: eine Seitenansicht auf eine erfindungsgemäße Einrichtung im Dachhimmel eines Fahrzeugs,
- Fig. 2: eine Draufsicht auf die Einrichtung gemäß Fig. 1,
- Fig. 3: eine Seitenansicht des Sensors gemäß Fig. 2 zur Verdeutlichung der Richtungsdetektionsbereiche,
- Fig. 4: eine Darstellung der Einrichtung mit einem sich nähernden Körper,
- Fig. 5: eine Darstellung der Einrichtung gemäß Fig. 4 mit einem sich in einer bestimmten Richtung entfernenden Körper,
- Fig. 6: die ausgerichtete Einrichtung der Fig. 4,
- Fig. 7: ein Blockschaltbild der Steuereinheit,
- Fig. 8: eine Draufsicht auf eine Einrichtung in einem zweiten Ausführungsbeispiel,
- Fig. 9a - 9c: Diagramme des Abstands, der Lichtintensität und des Signals für das Einschalten der Richtungsdetektion über der Zeit beim Einschalten und Ausrichten der Einrichtung,
- Fig. 10a, 10b: Diagramme des Abstands und der Lichtintensität über der Zeit für das Ausschalten der Einrichtung,
- Fig. 11a, 11b: Diagramme des Abstands und der Lichtintensität über der Zeit bei einem unbeabsichtigten Einschalten und anschließenden Ausschalten der Einrichtung,
- Fig. 12: eine Schaltung zur dreidimensionalen Positionserfassung,
- Fig. 13: eine Schaltung für eine eindimensionale Positionsbestimmung.

Die Figuren zeigen eine Einrichtung zur Steuerung einer Beleuchtung, insbesondere für Fahrzeuginnenräume, wobei das Ausführungsbeispiel an Hand einer Fahrzeuginnenbeleuchtung erläutert wird. Die beschriebene Ausführungsform lässt sich aber problemlos auf Beleuchtungen allgemein wie z.B. Tischlampen übertragen. In allen Fällen erfolgt eine berührungslose Ansteuerung einer Steuereinheit 27 mit zugehörigen Steuermitteln 34, die dann die Versorgung mit Licht im vom Benutzer gewünschten Umfang sicherstellen, wobei aber nicht nur - wie im Stand der Technik - ein berührungsloses Schalten erfolgt, sondern eine Lichtquelle in Abhängigkeit eines zumindest der Position des Körpers 24 entsprechenden Sensorsignals der Bewegung des Körpers oder eines Teils eines Körpers wie z.B. einer Hand, eines Beins oder eines Fingers in der Amplitude und/oder. in der Richtung nachgeführt wird. Der Begriff Körper steht dabei allgemein nicht nur für die Teile des menschlichen Körpers, sondern kann ganz allgemein beliebige Objekte umfassen, denen eine Lichtquelle nachzuführen ist.

Allgemein ist hierzu wenigstens eine Lichtquelle zur Versorgung mit Licht und wenigstens ein die Lichtquelle beeinflussender z.B. schaltender Sensor 7 vorgesehen, der zumindest die Bewegung eines Körpers 24 im sensoraktiven Bereich 18 des Sensors erfasst. Der Lichtquelle ist eine Steuereinheit 27 zur Ansteuerung der Lichtquelle in Abhängigkeit von einem von dem Sensor gelieferten Sensorsignal zugeordnet. Das von der Steuereinheit 27 angesteuerte Steuermittel 34 führt dann das Licht der wenigstens einen Lichtquelle der Bewegung des Körpers in der Amplitude und ggf. richtungsabhängig nach. Dazu besitzt der Sensor 7 Mittel zur Erkennung eines Bewegungsmusters des Körpers, die vorzugsweise durch optoelektronische Elemente zur nicht bildhaften Erkennung des Bewegungsmusters in Form von Leuchtdioden und Photodioden gebildet sind. Andere geeignete Erkennungsmittel können jedoch auch verwendet werden. An Hand der damit gewonnene Daten über die Position und ggf. Entfernung des Körpers wird daraus abgeleitet, wie der Benutzer das Licht einstellen möchte. Dazu sind Mittel zur Erzeugung eines Sensorsignals in Abhängigkeit des Bewegungsmusters vorgesehen, so dass die Steuermittel 34 infolge des Sensorsignals das Licht der Bewegung des Körpers in der Amplitude und ggf. richtungsabhängig nachführen.

Dies wird zunächst am Beispiel einer Beleuchtungseinrichtung, genauer Fahrzeuginnenbeleuchtung erläutert, wie sie insbesondere für Fahrzeuginnenräume z.B. im Dachhimmel eines Fahrzeugs oder bei einem Flugzeug für die Sitzbeleuchtung eingesetzt werden kann. Gleichwohl kann eine derartige intuitiv zu bedienende Einrichtung auch in anderen Bereichen z.B. im Inneneinrichtungsbereich oder Werkstattbereich eingesetzt werden.

Die Beleuchtungseinrichtung besitzt wenigstens einen wenigstens eine Lichtquelle 4 schaltenden Sensor 7. Steuermittel 34 - im Folgenden als Schalt- und Auswahleinheit 34 bezeichnet - werden von der Steuereinheit angesteuert und führen das Licht der wenigstens einen Lichtquelle in Abhängigkeit eines der Position des Körpers 24 entsprechenden Sensorsignals der Bewegung des Körpers amplitudenabhängig und/oder richtungsabhängig nach. Der Sensor 7 kann zumindest die Position des Körpers 24 vorzugsweise aber auch dessen Annäherung dreidimensional erfassen. Hierfür können mehrere und/oder gesonderte Sensoren vorgesehen sein, es genügt aber grundsätzlich auch nur ein einziger Sensor, sofern er in der Lage ist, die erforderlichen Sensorsignale über Annäherung/Entfernung und/oder Position des Körpers 24 zu liefern.

Vorzugsweise ist eine Intensitätsregelung 31 für die Helligkeit vorgesehen, die anspricht, wenn sich der Körper 24 dem sensoraktiven Bereich 18 nähert und einen vorbestimmten Wert 40 überschreitet, und die das Licht bei Überschreiten des vorbestimmten Wertes mit einer Teilleistung ansteuert und weiter so ansteuert, dass das Licht bei Entfernung des Körpers 24 bis zur Maximalleistung heller wird, also in der Intensität ansteigt, und bei weiterer Annäherung an den Sensor 7 bis zum endgültigen Ausschalten dunkler wird, also in der Intensität sinkt. Wird also der vorbestimmte Wert überschritten und das Licht eingeschaltet, nimmt der Benutzer wahr, das etwas "geschieht". Rein intuitiv wird er dann die Hand wieder wegziehen und erreicht damit die gewünschte Helligkeitserhöhung als auch Ausrichtung auf die Hand bzw. den Körper 24. Sollte die intuitive Bedienung es erfordern, kann dieses Prinzip auch so umgedreht werden, dass also bei Entfernung die Intensität sinkt und bei Annäherung die Intensität steigt.

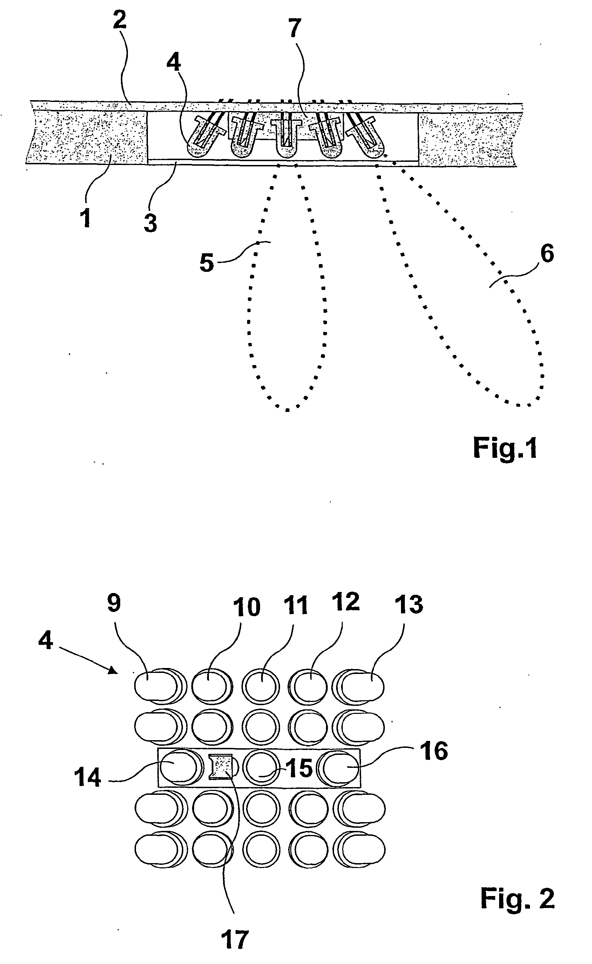

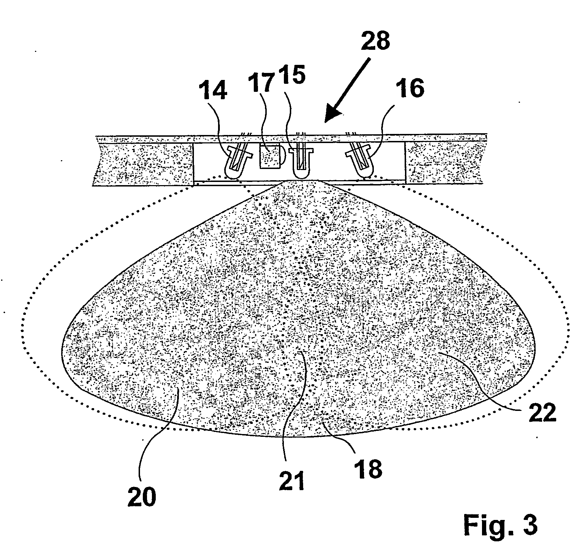

Im Ausführungsbeispiel der Fig. 1 sind die Leuchtmittel der Lichtquelle weiße Leuchtdioden 4 in einer 5 mm-Bauform mit Linse. Die Linse bewirkt eine schmalwinklige Abstrahlung 5, 6 des Lichtes. Die LEDs sind auf einer Platine 2 in einem Gehäuse 1 z.B. im Dachhimmel eines Kfz so angeordnet, das sie in fünf verschiedene Richtungen Licht durch ein translucentes Fenster 3 abgeben können. Zur größeren Lichtabgabe sind pro Lichtrichtung mehrere Leuchtdioden 9 bis 13 mechanisch in einer Reihe angeordnet (Fig. 2). In unmittelbarer Nähe der Leuchtenanordnung befindet sich ein Sensor 7 zur Erkennung eines bestimmten Bewegungsablaufes in seiner Nähe. Dieser Sensor 7 steuert die Leuchtdioden gemäss eines erkannten Bewegungsmusters.

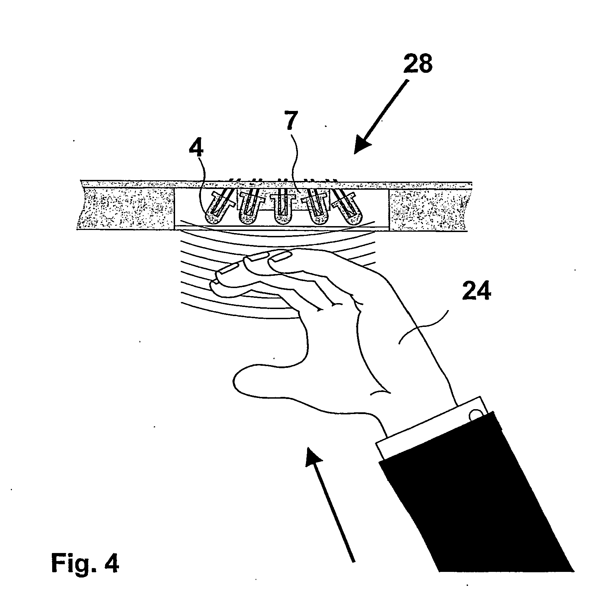

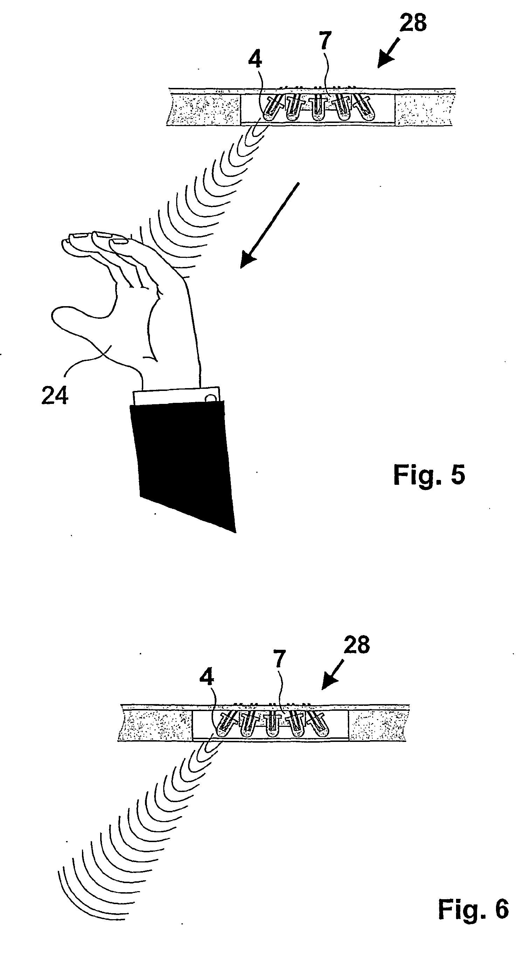

Am Beispiel Kfz-Innenbeleuchtung wird zum Einschalten und Steuern des Lichtes als zu erkennender Körper eine Hand 24 in Fig. 4 zur Lampe geführt. In der Nähe der Beleuchtungseinrichtung, z. B. 15 cm davon entfernt, schaltet sich die Beleuchtung ein (Fig. 4). Um den Fahrer nicht zu blenden, erfolgt das Einschalten vorzugsweise mit teilweiser Leistung bzw. Intensität z. B. mit nur 50 % der maximalen Leistung. Solange der Benutzer seine Hand in einem gleich bleibenden Abstand vom Sensor bewegt, bleibt die Lichtintensität unverändert. Nun zieht der Benutzer seine Hand 24 in die Richtung, in der er das Licht haben möchte, im Ausführungsbeispiel der Fig. 5. nach links. Der bewegungsdetektierende Sensor 7 detektiert die Bewegungsrichtung der Hand 24 weg von der Beleuchtungseinrichtung und wählt eine von z.B. fünf Richtungen aus. Die in dieser Bewegungsrichtung angeordnete LED-Reihe wird nun auf 100% Leistung geschaltet, während die verbleibenden LEDs abgeschaltet werden. Will der Benutzer zu irgendeinem Zeitpunkt das Licht dirigieren, so muss er nur die Hand 24 im gleich bleibenden Abstand zum Sensor 7 bewegen, wobei das Licht der Bewegung mit gleichbleibender Helligkeit folgt. Um für den Benutzer den Eindruck einer einzigen Leuchte zu erwecken, können die in den verschiedenen Richtungen abstrahlenden Leuchtquellen oder LEDs im Hinblick auf den Abstrahlwinkel auch nicht reihenweise angeordnet sein, sondern untereinander gemischt bzw. verschachtelt sein.

Somit kann mit einer einfachen, intuitiven Handbewegung das Licht eingeschaltet und in die gewünschte Richtung dirigiert werden.

Zum Ausschalten bewegt der Anwender seine Hand 24 wieder in Richtung der Beleuchtungseinrichtung. In der Nähe der Beleuchtungseinrichtung, z.B. bei einem Abstand kleiner 15 cm, regelt die Helligkeitsregelung 31 die Leuchtstärke analog zur Annäherung auf kleinere Werte. Auch dies gibt dem Benutzer das Gefühl, das etwas "geschieht". Bei weiterer Annäherung, wenn die Beleuchtung z. B. auf 10 % heruntergeregelt wurde, schaltet das Licht aus. Das Ausschalten des Lichtes erfolgt somit auf genau so einfache Weise wie das Einschalten.

Das Herunterregeln des Lichtes bei Annäherung hat folgenden Grund: Wird irrtümlich der sensoraktive Bereich des Sensors 7 bei einer zufälligen Bewegung überstrichen, kommt es nicht zu einem, für den Benutzer vielleicht überraschenden Ausschalten der Beleuchtung. Vielmehr zeigt das Herunterregeln der Beleuchtung dem Benutzer an, das er im "sensoraktiven" Bereich ist. Er kann sich jetzt daraus entfernen, ohne das die Beleuchtung abschaltet - oder willentlich die Beleuchtung durch weiteres Annähern ausschalten.

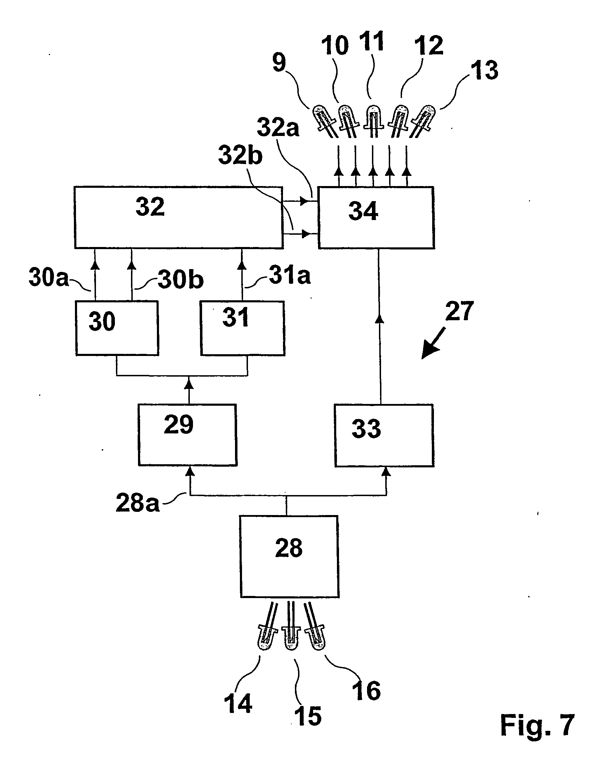

Zur Erkennung des Bewegungsmusters ist zunächst die Annäherung der Hand 24 zu erkennen. Gleichzeitig sollte die Position in Bezug auf die Mittelachse bzw. Mitte des Richtungsdetektionsbereichs 21 in Fig. 3 erkannt werden. Die Sensoreinheit besitzt dazu z.B. zwei Leuchtdioden 14,16, in deren Wirkungsbereich eine Richtungsdetektion in den Richtungsdetektionsbereichen 20,22 möglich ist. Gemeinsam definieren die Richtungsdetektionsbereiche den sensoraktiven Bereich 18 des Sensors. Hierzu kann in bekannter Weise z.B. von den Leuchtdioden 14,16 wechselweise abgestrahltes und getaktetes Licht an einem Körper, wie der Hand 24 reflektiert und von einem Empfänger wie der Photodiode 15 empfangen werden. Das Erkennen der Position des Körpers in Bezug auf den Richtungsdetektionsbereich geschieht in Fig. 7 in der Schaltungsanordnung von Sensoreinheit 28, Annäherungsdetektion 29 und Schwellwertdetektion 30. Die Schaltungsanordnung 28/29 liefert ein Signal für die Annäherung und die Schaltungsanordnung 28/33 ein Richtungssignal.

Dem Annäherungssignal werden in der Schwellwertdetektion 30 die Signale für die erste Erkennung der Hand 24 in Fig. 4 in z.B. 15 cm Entfernung sowie für eine zweite Erkennung der Hand in unmittelbarer Nähe der Sensoreinheit, z.B. 3 cm, zugeordnet. Die Helligkeitsregelung 31 wandelt die Entfernungsinformation in eine Helligkeitsinformation für die LEDs 9 - 13 um. Die Verknüpfungseinheit 32 verknüpft die von Schwellwertdetektion 30 und Heiligkeitsregelung 31 kommenden Informationen zu einer Helligkeits- und Schaltfunktion für die Schalt- und Auswahleinheit 34.

Dies geschieht im Ausführungsbeispiel aus einem Ruhezustand heraus in folgender Weise: Nähert sich eine Hand 24 der Sensoreinheit 28, gibt sie ein Signal 28a für Annäherung und Position an die Annäherungsdetektion 29. Diese reagiert-nur auf Signale, die einer Annäherung entsprechen, und gibt diese an die Schwellwertdetektion 30 und die Helligkeitsregelung 31 weiter. Bei einer vorbestimmten Annäherung, z.B. 10 cm, gibt die Schwellwertdetektion 30 ein erstes Ausgangssignal 30a an die Verknüpfungseinheit 32. Diese gibt nun ein Steuersignal 32a an die Auswahleinheit 34 ab, was daraufhin über die Schalt- und Auswahleinheit alle LEDs 9-13 mit z.B. 50% Helligkeit aufleuchten lässt.

Wird die Hand 24 wieder entfernt, erkennt das die Verknüpfungseinheit 32 am Zurückschalten des Schwellwertsignals 30a und verwertet nun die aus dem Abstand der Hand bestimmte Helligkeitsinformation 31 a in der Art, das die Helligkeit mit zunehmenden Abstand zunimmt. Gleichzeitig wird über ein Steuersignal 32b die Auswahleinheit 34 aktiviert. Diese wertet die aus der Richtungs- und Positionsdetektion 33 kommende Information aus, um eine richtungsabhängige Auswahl der Leuchtdioden 9 -13 zu treffen. Dadurch ist eine Übereinstimmung der Lichtposition zur Handposition durch Auswahl der ungefähr in Richtung der sich entfernenden Hand 24 weisenden LEDs gewährleistet. Der Einfachheit halber ist in Fig. 7 nur die erste von z.B. je vier LEDs dargestellt, die alle in die gleiche Richtung weisen.

Bei Überschreiten eines bestimmten Abstandes der Hand 24 vom Sensor, z. B. 30 cm, detektiert die Schwellwertdetektion 30 dies und gibt ein zweites Ausgangssignal 30b an die Verknüpfungseinheit 32. Diese sperrt mit einem Steuersignal 32b die Auswahleinheit 34 und hält die aktuelle Position der Lichtausgabe fest.

Somit wird mit einer Annäherung der Hand an die Beleuchtungseinheit das Licht mit halber Intensität eingeschaltet. Mit der Entfernung der Hand in die gewünschte Richtung wird das Licht heller geregelt und auf die Handposition dirigiert. Bei weiterer Entfernung bleibt das Licht in der gewünschten Position stehen.

Zum Ausschalten der Beleuchtung wird die Hand erneut an die Beleuchtungseinrichtung herangeführt. Ab einer bestimmten Nähe, z.B. 15 cm gibt die Schwellwertdetektion 30 ein Steuersignal an die Verknüpfungseinheit 32 ab. Diese verknüpft die Information der Helligkeitsregelung 31 mit der Schalt- und Auswahleinheit in der Art, dass bei einer weiteren Annäherung die Beleuchtungsstärke abnimmt. Bei Unterschreiten eines bestimmten Abstandes, z. B. 3 cm, gibt die Schwellwertdetektion 30 ein zweites Signal an die Verknüpfungseinheit 32 ab, die daraufhin über die Schalt- und Auswahleinheit 34 die Beleuchtung abschaltet. Für ein erneutes Einschalten der Beleuchtung muss die Hand erst von der Beleuchtungseinheit um einen Mindestbetrag, z. B. 15 cm entfernt werden. Daraufhin ist die Beleuchtungsanordnung wieder im Ruhezustand.

Bisher wurde das Ausführungsbeispiel mit einer Anzahl Leuchtmittel als Lichtquelle erläutert, die so angeordnet sind, dass sie in jeweils unterschiedliche Richtungen leuchten können. Alternativ können auch ein oder mehrere Leuchtmittel über einen Motor, vorzugsweise einen Stellmotor so angetrieben werden, dass ebenfalls eine richtungsabhängige Beleuchtung durch Nachführen der Leuchtmittel möglich ist.

Der Sensor kann beliebig gestaltet werden. Es können z.B. Ultraschallsensoren, kapazitive Sensoren oder auch optische Sensoren zur Erfassung des Abstandes und der Position eingesetzt werden.

Es ist auch denkbar, auf die Entfernungsdetektion zu verzichten, wenn auch der Sensor möglicherweise nicht ganz so bedienerfreundlich reagiert. In diesem Fall wird nur die Information der Positionsdetektion 33 in Fig. 7 verwertet. Dabei wird davon ausgegangen, dass während einer Annäherung einer Hand sich in der Regel die Position relativ zur Mittelachse des Richtungsdetektionsbereichs 21 in Fig. 3 verändert. Diese Veränderung, sozusagen ein "Wackeln", wird um so stärker wahrgenommen, je näher die Hand der Sensoreinheit kommt. Überschreitet diese Veränderung einen vorbestimmten Wert, wird die Beleuchtungseinrichtung eingeschaltet. Nach Bestimmung der Position der Hand wird die in die entsprechende Richtung weisende LED-Reihe als einzige aktiviert. Erfolgt dann für einen vorbestimmten Zeitraum keine weitere Veränderung der Positionswerte, kann davon ausgegangen werden, dass sich die Hand entfernt hatte. Zum Ausschalten wird wieder die Positionsdetektion 33 überwacht. Überschreitet, durch Annäherung einer Hand, die Veränderung einen vorbestimmten Wert, wird die Beleuchtung ausgeschaltet.

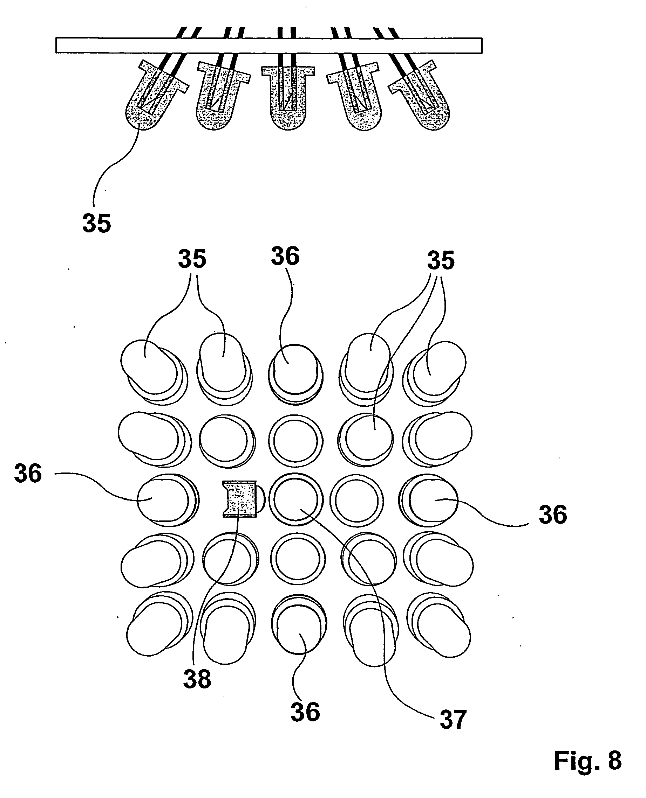

Selbstverständlich muss die Richtung der Beleuchtung nicht auf eine Ebene, bzw. nur fünf Positionen beschränkt bleiben. Aus der älteren Patentanmeldung DE 101 33 823.6 ist eine Sensoranordnung zur Bestimmung der Position eines Körpers, z. B. eines Fingers in allen drei Raumebenen bekannt. Mit einer solchen Sensoranordnung kann die Position der Handbewegung nach links oder rechts, bzw. nach vorne oder nach hinten, bestimmt werden. Gleichzeitig kann dieser Sensor die Entfernung der Hand 24 bestimmen. Bei Anwendung einer solchen Sensoranordnung ist selbstverständlich die Anzahl der möglichen Beleuchtungsrichtungen frei bestimmbar. Um Zwischenwerte zu bekommen, können auch je zwei nebeneinanderliegende Beleuchtungswinkel gleichzeitig, aktiviert werden, z.B. dann mit halber Intensität, um bei einer Winkelveränderung der Beleuchtung gleiche Helligkeit zu erreichen. Eine solche Anordnung zeigt das Ausführungsbeispiel Fig. 8. In der Mitte der Anordnung befindet sich die Photodiode 37, die zur Positionsbestimmung notwendigen LEDs 36 sind kreuzförmig um die Photodiode gruppiert. Die seitlich abstrahlende LED 38 dient zur Kompensation von Fremdlicht, wie aus der EP 706 648 A1 bekannt. Alle weiteren LEDs 35 strahlen in verschiedene Richtungen. Selbstverständlich kann die Sensoranordnung auch außerhalb der Beleuchtungseinrichtung angebracht werden, eine Anordnung innerhalb der Leuchtmittel bietet lediglich den Vorteil der intuitiveren Bedienbarkeit.

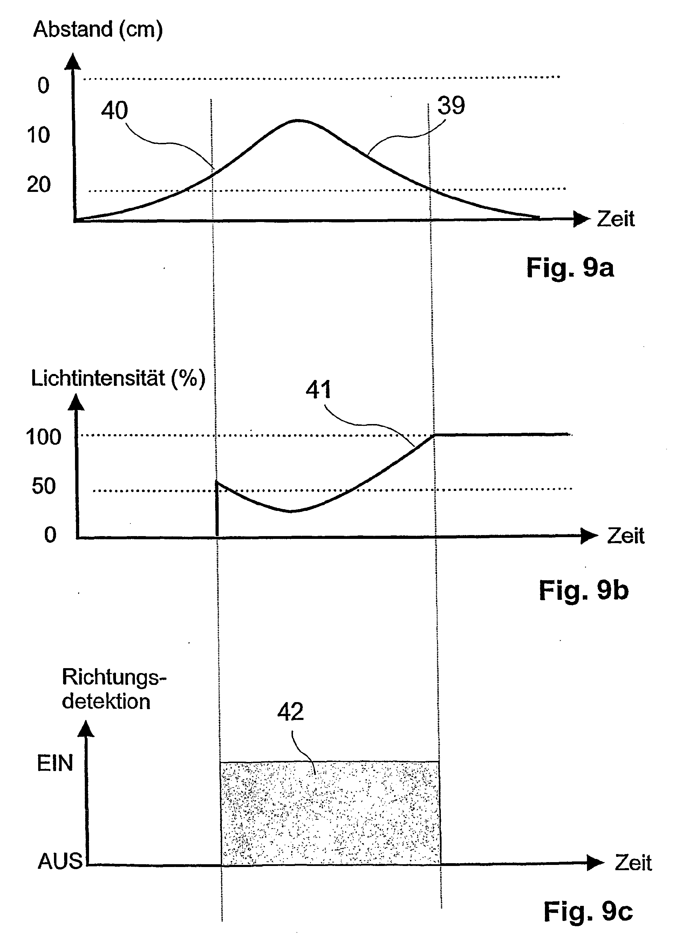

Fig. 9a bis 9c zeigen den Zusammenhang zwischen dem Abstand eines reflektierenden Gegenstandes, im Ausführungsbeispiel einer Hand, und dem Schalt- und Regelvorgang der Beleuchtung. Die Kurve 39 in Fig. 9a entspricht einer Annäherung der Hand an die Sensorvorrichtung. Ab einer Nähe von ca. 15 cm, entsprechend Position oder Schwellwert 40, schaltet sich die Beleuchtung gemäß der Kurve 41 der Lichtintensität in Fig. 9b mit ungefähr halber Lichtleistung ein. Ein weiteres Annähern führt zu einer Abnahme der Intensität der Beleuchtung, ein Entfernen zu einer Regelung auf volle Lichtleistung. Gleichzeitig wird die Richtungsdetektion während eines Zeitraumes 42 in Fig. 9c aktiviert, dabei "folgt" das Licht der sich bewegenden Hand. Ein Ausschalten der Richtungsdetektion kann z.B. bei Erreichen der vollen Lichtleistung der Beleuchtung erfolgen, also wenn die Hand in die gewünschte Richtung des Lichtes entfernt wurde. Damit wird gewährleistet, dass bei einem versehentlichen Annähern an die Beleuchtungseinheit nicht spontan die Richtung umspringt und den Fahrer möglicherweise blendet.

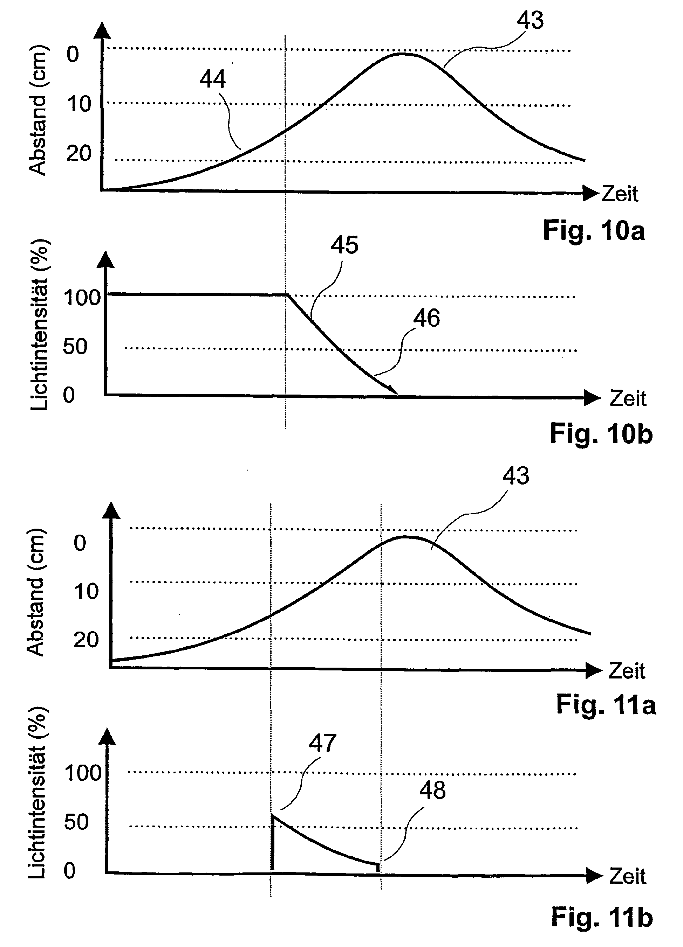

Das Ausschalten erfolgt in ähnlicher Weise wie das Einschalten. Fig.10a zeigt einen Bewegungsablauf 43, bei dem sich die Hand wieder zunächst soweit der Beleuchtungseinheit genähert hat, bis die Helligkeitsregelung 31 bei einem dem Schwellwert 44 entsprechenden Abstand anspricht. Dies zeigt dem Benutzer, das er sich im sensoraktiven Bereich befindet. Ein weiteres Annähern führt zunächst zu einer weiteren Abnahme 45 in Fig. 10b der Beleuchtung bis Null. Ab einer Beleuchtung von z.B. kleiner als 10% kann auch direkt zum Zeitpunkt 46 ausgeschaltet werden. Alternativ kann auch vorgesehen werden, dass das Licht bei der ersten Annäherung z.B. auf 10% reduziert und mit dieser Leistung festgelegt wird und dass erst bei einer zweiten Annäherung das Ausschalten erfolgt, um z.B. Fehlbedienungen zu vermeiden.

Nähert man sich versehentlich einer ausgeschalteten Beleuchtungseinheit, so dass die Beleuchtung ungewollt einschaltet, ergibt sich eine Kurve 47 gemäß Fig. 11a. Durch weitere Annäherung bis in unmittelbarer Nähe an die Beleuchtungseinrichtung kann das Licht sofort wieder heruntergeregelt und zum Zeitpunkt 48 ausgeschaltet werden.

Somit ist eine intuitive und äußerst einfache Bedienung einer Sensor-gesteuerten Beleuchtungseinrichtung gegeben.

In der Regel wird es vorzuziehen sein, die Sensoranordnung mit einer nicht sichtbaren Wellenlänge, z. B. Infrarot, zu betreiben, während die Beleuchtungseinheit naturgemäß im sichtbaren Wellenlängenbereich arbeiten wird. Bei einer entsprechenden Auslegung der Elektronik kann jedoch auch die Beleuchtungseinrichtung selbst in die Sensorfunktion eingebunden werden. Dabei werden eine oder mehrere, in die entsprechenden Richtung weisende Beleuchtungs-LEDs kurzfristig als Sensor-Sendeelemente betrieben. Geschieht dies z.B. 50 x in der Sekunde für z.B. 0.2 ms, so entspricht dies einer "Lichtleistung" für das Auge von einem Hunderstel der möglichen Gesamtlichtstärke. Dies ist dann in der Praxis vielleicht noch gerade als ein schwaches Glimmen sichtbar. In den Messpausen ist die Beleuchtungseinrichtung dann je nach Schaltzustand entweder ein- oder ausgeschaltet, bzw. im geregelten Zustand.

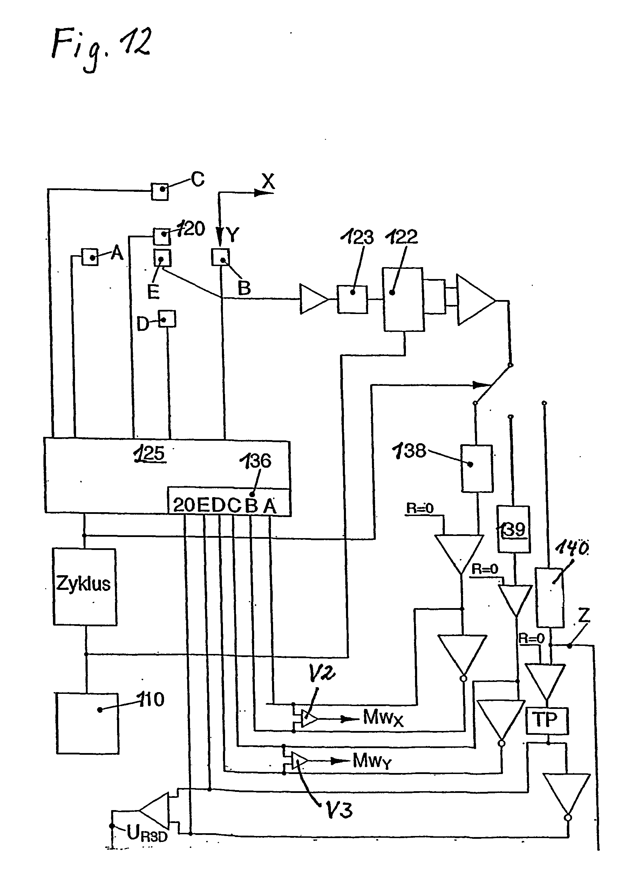

Ein möglicher Aufbau für eine Sensorschaltung nach der älteren deutschen Patentanmeldung 101 33 823.6 ist in Fig. 12 dargestellt. Soweit im Folgenden nicht erläutert, wird im übrigen auf den Offenbarungsgehalt dieser Patentanmeldung verwiesen, deren Inhalt hiermit auch ausdrücklich zum Gegenstand der vorliegenden Anmeldung gemacht wird. Die Figur zeigt eine optoelektronische Vorrichtung zur Erfassung der Position und/oder Bewegung eines Körpers, die mehrere Sender A,B,C,D zur Aussendung einer Lichtstrahlung aufweisen. Den Sendern ist wenigstens ein Empfänger E zum Empfang der von den Sendern A-D ausgestrahlten und vom Körper rückgestrahlten Strahlung zugeordnet. Zwischen den Sendern, dem Körper und den Empfängern bilden sich je nach Beschaltung mehrere voneinander verschiedene Strahlungsstrecken, im Falle von Licht Lichtstrecken aus, an denen wenigstens ein Teil der Sender A-D und der Empfänger E beteiligt sind. Die Ansteuerung der Sender erfolgt über einen Taktgeber 110.

Die von den Empfängern ermittelten Signale werden einer Auswerteeinrichtung zugeleitet, die die von den Empfängern E aus den verschiedenen Lichtstrecken empfangenen Signale zunächst in zweidimensionale Werte x, y zur Erfassung der Position und/oder der Bewegung z.B. einer Hand in einer oder entlang einer Fläche umsetzen. Zur dreidimensionalen Erfassung der Position und/oder Bewegung des Körpers schaltet die Taktschaltung dann in Fig. 12 die Sender A-D und/oder die Empfänger E in einem weiteren Takt so wirksam, dass der Raum, in dem die Sender A-D einstrahlen, weitestgehend gleichmäßig bei gleichem Taktbetrieb ausgeleuchtet ist. Die Auswerteeinrichtung kann dann aufgrund der vom Körper während dieses weiteren Takts zurückgestrahlten Strahlung einen Wert zur Bestimmung der Entfernung des Körpers von der Fläche bestimmen.

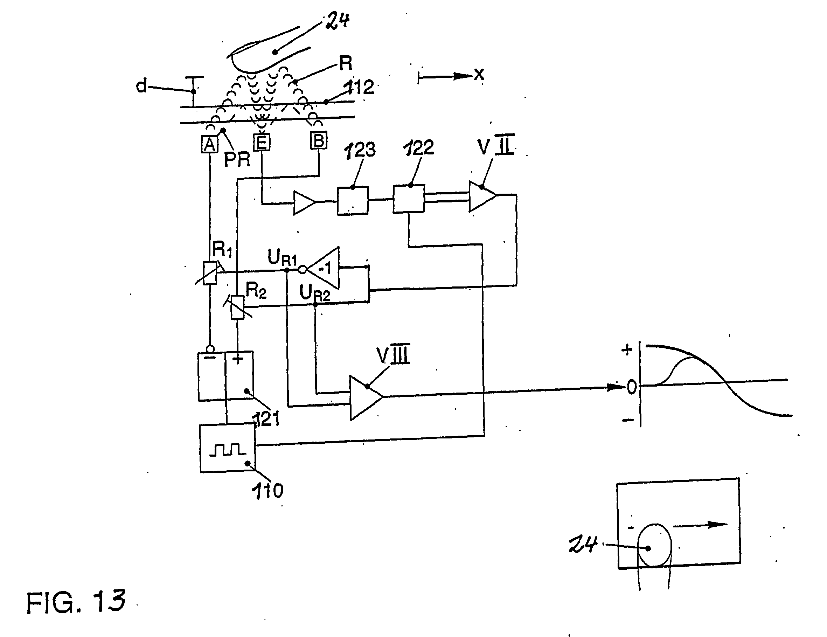

Die Position z.B. einer Hand über einer gegebenen Oberfläche lässt sich am einfachsten durch zwei getrennte Sensorelemente bestimmen, die z.B. wie in Figur 12 dargestellt, kreuzartig angeordnet sind. Ein Sensorelement mit den Sendern A,B bestimmt die horizontaie Position, das andere Elemente mit den Sendern C,D die vertikale Position. Die aus dem reflektierten Licht ermittelten Messwerte ergeben jeweils die horizontale oder vertikale Position des Körpers außerhalb der Bedienoberfläche. In Figur 13 wird für eine eindimensionale Positionserfassung das Prinzip erläutert. Die Sender A,B sind z.B. LEDs, der Empfänger E ist z.B. eine Photodiode oder eine entsprechend als Empfänger beschaltete Leuchtdiode. Die Sender A,B werden über den Invertierer invertiert angesteuert. Sie werden dabei so in ihrer Leistung über die Regelwiderstände R1,R2 geregelt, das am Empfänger E ein Gleichlichtanteil ohne taktsynchronen Wechselanteil ansteht. Im Gegensatz zur EP 706 648 A1 wird jedoch das Leistungsverhältnis der Sendeelemente nicht bewusst zeitverzögert sondern so schnell wie möglich nachgeregelt. Dadurch wird eine sofortige Reaktion der Regelspannungskorrektur für die Sendeleistung der Sendeelemente bei einer Positionsänderung des Körpers 24 erreicht.

Bei der Positionsbestimmung wird der statische Wert der Regelspannung benötigt. Um diesen Wert möglichst unabhängig von thermischen Einflüssen oder Alterungseinflüssen zu erhalten, wird die den einzelnen Regelwiderständen R1 und R2 zugeführte Regelspannung U_{R,1},U_{R,2} zur Einstellung der Ausgangsleistung abgegriffen und mit dem Vergleicher V III verglichen. Der über den Vergleicher V III ermittelte Wert stellt den elektrischen Wert der mechanischen Position z.B. einer Hand in x-Richtung dar. Das vom Empfänger E ermittelte Signal wird einem Hochpass 123 zugeführt und mittels eines Synchrondemodulators 122 und anschließendem Vergleichen im Vergleicher V II taktweise verglichen. Bei Vorhandensein eines Körpers 24 ergibt sich damit ein Wert für die Regelspannung, die den Regelwiderständen R1, R2 entgegengesetzt zugeführt wird.

Ohne die Anwesenheit des Körpers wird parasitäre Reflexion bei entsprechendem Aufbau ungefähr gleiche Anteile der Sendeleistung von A und B wechselseitig zum Empfänger E streuen. Dabei bleibt die Regelspannung nahezu unbeeinflusst, also bei Null. Bei Annäherung eines Körpers unsymmetrisch zur Mitte, versucht die Regelschleife die Lichtleistung so einzustellen, dass am Empfänger E wieder ein Gleichtlichtsignal ohne Wechsellichtanteile ansteht. Dies führt zu einer Verschiebung der Regelspannungssymmetrie an den Regelwiderständen R1,R2 und somit auch zu einem Ausgangssignal am Vergleicher V III je nach Positionierung der Hand 24 nach rechts oder links vom Mittelpunkt der mechanischen Anordnung. Das Ausgangssignal nimmt mehr oder weniger positive bzw. negative Werte an, wie dies in Figur 1 rechts unten bei Bewegung einer Hand verdeutlicht ist.

Die dargestellte Messstrecke kann selbstverständlich nur eine eindimensionale Funktion erfüllen. Zur zweidimensionalen Erfassung der Position benötigt man zwei getrennte Messstrecken, die möglichst um 90° zueinander versetzt sind. Der Empfänger E kann für beide Messstrecken also A,B und C,D gemeinsam genutzt werden. In diesem Fall wird abwechselnd die Lichtstrecke in x-Richtung und die Lichtstrecke in y-Richtung wechselseitig getaktet. Dies kann durch Umschalten nach jeweils mehreren Taktperioden z.B. 30 x A/B, danach 30 x C/D geschehen oder durch Umschalten nach jedem Taktzyklus. Wichtig ist nur, dass die Messwertausgabe den jeweiligen Taktzyklen entsprechend zugeordnet wird.

Zur Erfassung der dritten Dimension ist bei flacher Anordnung der Fläche 112 die Position des Körpers im Verhältnis zur Fläche 112 zu bestimmen. Geht man von einer nahezu flachen Anordnung der optischen Elemente aus, also davon, dass keine Sender oder Empfänger nach oben aus der Fläche 112 herausragen, kann die Bestimmung der Position des Körpers im Wesentlichen nur durch Reflexion R erfolgen. Zur Bestimmung der Positionserfassung in der dritten Dimension wird gemäß Fig. 12 zu den beiden Taktzyklen zur Bestimmung des x-Wertes und des y-Wertes der Lage des Betätigungselements auf der Fläche 112 noch mindestens ein weiterer Taktzyklus hinzugefügt. In diesem Taktzyklus werden die Sender A-D so angesteuert, dass sie alle oder zumindest ein Teil davon das gleiche Taktsignal erhalten, also gleichzeitig leuchten. Hierbei ist es nicht erforderlich, dass sie einzeln geregelt werden, wie es zur Positionsbestimmung in x- und y-Richtung notwendig ist. Weiterhin wird mindestens eine weitere Lichtquelle 120 als Kompensationsmittel in der Nähe des oder der Empfänger E so angeordnet, dass das von dieser weiteren Lichtquelle abgestrahlte Licht nahezu ausschließlich in die Empfänger einstrahlt. Spielt Fremdlicht keine Rolle, kann auf diese Kompensationsmittel verzichtet werden.

Nähert sich der Körper der Fläche 112, wird dies durch Erkennungsmittel 114 erkannt und kann z.B. die Positionsbestimmung in x- und y-Richtung aktivieren. Jede Bewegung weg von der Fläche 112 führt zu einer Veränderung der Regelspannung U_{R3D}, die proportional zum Abstand des Körpers von der Fläche 112 ist. Die Taktschaltung besitzt einen Taktverteiler 125, der nicht nur die jeweiligen Sender und Empfänger ansteuert, sondern zugleich auch die Leistungsregelungen 136 entsprechend ansteuert, so dass durch die Vergleicher V2 und V3 die entsprechenden Messwerte Mwₓ und Mw_{y} erfasst werden können.

Der Sensor 7, der analog zu Fig. 4 z.B. an einer Tischlampe eingesetzt wird, erkennt zum Ausschalten der Einrichtung das Annähern des Körpers 24. Bei Unterschreiten eines vorbestimmten Abstandes, der maximal der Außengrenze des sensoraktiven Bereichs 18 entspricht, zwischen Körper und Sensor schalten, regeln oder dimmen die Steuermittel 34 bei weiterem Annähern des Körpers 24 allmählich die Lichtquelle herunter, bis die Lichtquelle versiegt.

Bei einer Bewegung des Körpers 24 im sensoraktiven Bereich 18 mit gleichbleibendem Abstand zum Sensor, also z.B. auf einer Kurvenbahn wird das Licht mit gleichbleibender Intensität richtungsabhängig nachgeführt. Damit wird insbesondere beim Einsatzbereich im Fahrzeug sichergestellt, dass es nicht zu einem unbeabsichtigten eventuellen schlagartigen Aufblenden des Licht kommt. Wird auf die Amplitude Einfluss genommen, kann die Einrichtung z.B. auch an einer Tischlampe eingesetzt werden, um diese in ihrer Intensität durch bloße Bewegung berührungslos zu beeinflussen, also z.B. stufenweise zu schalten oder stufenlos zu regeln bzw. zu dimmen.

Zum allmählichen Nachführen der Lichtintensität, also zum Dimmen des Lichts, ändern die Steuermittel 34, ausgehend von einem Zustand mit vorgegebener Intensität des Lichts bei vorgegebener Position des Körpers 24, entweder die Intensität in der einen Richtung, wenn sich der Körper 24 weiter nähert, oder in der anderen Richtung, wenn sich der Körper 24 weiter entfernt. Damit kann bis zu einem bestimmten Punkt z.B. Licht gedimmt bzw. geregelt werden. Bei einer der jeweiligen Richtung entgegengesetzten Bewegung bleibt jedoch die erreichte Intensität beibehalten, bis eine erneute Bewegung an der erreichten Intensität vorbei erfolgt. Ergänzend kann unterhalb einer vorgegebenen Intensität das Licht nur noch weiter bis zum Ausschalten verringert werden.

Zur Bedienung führt der Benutzer seine Hand 24 an die Lampe als Lichtquelle heran. Ab einem bestimmten Punkt erkennt der Sensor, dass ein vorbestimmter Wert überschritten wurde und schaltet das Licht vorzugsweise mit halber Intensität ggf. aber auch mit voller Intensität ein. Je nach Bewegungsrichtung des Körpers auf den Sensor zu oder von ihm weg, wird das Licht jetzt in seiner Intensität sprich Helligkeit verändert. Beim Reduzieren der Intensität können die Steuermittel das Sensorsignal z.B. so verwerten, dass nur ein Annähern zu einer Veränderung der Helligkeit führt, ein Entfernen jedoch nicht (oder umgekehrt). Dies kann z.B. über einen Zähler erfolgen, der nur in eine Richtung zählt. Oder bei Erhöhen der Intensität nimmt der Sensor ausgehend von seinem Einschaltzustand oder dem zuletzt eingestellten Ausgangszustand die Entfernung des Körpers wahr und führt die Helligkeit bis zur maximalen Intensität nach, wobei dann durch eine folgende Annäherung die gewünschte Helligkeit eingestellt wird (oder umgekehrt). Es kann aber auch nur ein Erhöhen bis zur Maximalleistung bzw. Reduzieren bis zu einem Minimalwert von den Steuermitteln erlaubt werden.

Ergänzend kann insbesondere dann, wenn die Einrichtung blind oder ohne einen Blick darauf zu werfen, bedient werden soll, eine Meldeeinrichtung zur akustischen Rückmeldung mit mindestens einem Ton oder Klangbild vorgesehen sein. Diese Meldeeinrichtung erzeugt in Abhängigkeit der vom Sensor wahrgenommenen Bewegung, wenigstens einen Ton oder ein Klangbild, wobei vorzugsweise verschiedene Klangbilder z.B. für das Ausschalten oder Einschalten der Lichtquelle oder für das Nachführen, Dimmen oder Regeln erzeugt werden.

Das Ausführungsbeispiel betraf ausdrücklich auf die Steuerung von Licht. Um die Übertragbarkeit diese Prinzips auf andere Bereiche zu verdeutlichen, muss im Ausführungsbeispiel z.B. lediglich Licht durch Luft und die Beleuchtungseinrichtung durch eine Belüftungseinrichtung ersetzt werden. Es ergibt sich dann im Wesentlichen ein analoger Aufbau, der z.B. zur Steuerung einer Belüftung eingesetzt werden kann. Einrichtungen zur Steuerung einer Beleuchtung, Belüftung oder dergleichen sind grundsätzlich in Form von z. B. Alarmanlagen oder auch Ansteuerungen von Belüftungen, Temperatursteuerungen von Heizplatten oder auch von Wasserausläufen bekannt. In allen Fällen erfolgt eine berührungslose Ansteuerung einer Steuereinheit mit zugehörigen Steuermitteln, die dann die Versorgung des jeweiligen Mediums (in den genannten Beispielen Licht, Luft, Wärme, Wasser) im vom Benutzer gewünschten Umfang sicherstellen.

Punkte der Erfindung, die auch je für sich eingesetzt werden können, sind damit
- Die Verwendung eines Sensors, der ohne Bilderfassung und -auswertung, eine Positionsbestimmung des Körpers durchführt.
- Die Verwendung von Leuchtdioden und Photodioden oder sogar nur Leuchtdioden als optoelektronische Elemente zur Erkennung von Bewegungsmustem.
- Das Erkennen intuitiver Bewegungsmuster beim Ein- und Ausschalten und insbesondere beim Dimmen einer Lichtquelle.
- Die Verwendung des Prinzips auch zur Steuerung von Einrichtungen zur Bereitstellung anderer Medien.

### Bezugszeichenliste

- 1: Gehäuse, z.B. Dachhimmel
- 2: Platine
- 3: Translucentes Fenster
- 4: LED
- 5,6: Abstrahlung
- 7: Annäherungs/Richtungssensor
- 9: erste LED einer ersten LED-Reihe
- 10: erste LED einer zweiten LED-Reihe
- 11: erste LED einer dritten LED-Reihe
- 12: erste LED einer vierten LED-Reihe
- 13: erste LED einer fünften LED-Reihe
- 14: erste LED eines Annäherungs/Richtungssensor
- 15: Photodiode eines Annäherungs/Richtungssensor
- 16: zweite LED eines Annäherungs/Richtungssensor
- 17: Kompensations-LED
- 18: Sensoraktiver Bereich
- 20: Richtungsdetektionsbereich links
- 21: Richtungsdetektionsbereich Mitte
- 22: Richtungsdetektionsbereich rechts
- 24: Hand
- 27: Steuereinheit
- 28: Sensoreinheit
- 28a: Signal für Annäherung/Position
- 29: Annäherungsdetektion
- 30: Schwellwertdetektion
- 30a: erstes Ausgangssignal
- 30b: zweites Ausgangssignal
- 31: Helligkeitsregelung
- 31a: Helligkeitsinformation
- 32: Verknüpfungseinheit
- 32a: Steuersignal
- 32b: Steuersignal
- 33: Richtungsdetektion
- 34: Schalt- u. Auswahleinheit
- 35: LED für Beleuchtung
- 36: LEDs für Positionserfassung
- 37: Photodiode
- 38: Kompensations-LED
- 39: Bewegungsablauf "Einschalten"
- 40: Schwellwert für "Einschalten"
- 41: Lichtintensität bei Einschaltvorgang
- 42: Zeitraum, in dem Richtungsdetektion aktiv ist
- 43: Bewegungsablauf "Ausschalten"
- 44: Aktivierungsschwellwert der Regelung
- 45: Regelung der Helligkeit
- 46: Abschaltzeitpunkt
- 47: Versehentliches Einschalten
- 48: Abschaltzeitpunkt
- 110: Taktgeber
- 112: Fläche
- 120: weitere Lichtquelle
- 121: Invertierer
- 122: Synchrondemodulator
- 123: Hochpass
- 125: Taktverteiler
- 136: Leistungsregelung
- 138: Speicher
- 139: Speicher
- 140: Speicher
- A-D: Sender
- E: Empfänger
- d: Entfernung
- Mwₓ: Messwert x
- Mw_{y}: Messwert y
- VII, VIII: Vergleicher
- V1 - V3: Vergleicher

## Patentansprüche

1. Einrichtung zur Steuerung einer Beleuchtung, insbesondere für Fahrzeuginnenräume, mit wenigstens einer Lichtquelle, wenigstens einem die Lichtquelle beeinflussenden Sensor (7), der zumindest die Bewegung eines Körpers (24) oder eines Teils des Körpers im sensoraktiven Bereich (18) des Sensors erfasst, sowie mit einer der Lichtquelle zugeordneten Steuereinheit (27) zur Ansteuerung der Lichtquelle in Abhängigkeit von einem von dem Sensor gelieferten Sensorsignal mittels Steuermitteln (34), die das Licht der Lichtquelle in Abhängigkeit eines zumindest der Position des Körpers (24) entsprechenden Sensorsignals der Bewegung des Körpers nachführen, wobei der Sensor (7) Mittel zur Erkennung eines Bewegungsmusters des Körpers aufweist und Mittel zur Erzeugung eines Sensorsignals in Abhängigkeit des Bewegungsmusters vorgesehen sind,
**dadurch gekennzeichnet, dass** die Steuermittel (34) infolge des Sensorsignals das Licht der Bewegung des Körpers in der Amplitude und in seiner Abstrahlrichtung auf den Körper richtungsabhängig nachführen.

2. Einrichtung nach Anspruch 1, **dadurch gekennzeichnet, dass** der optische Sensor (7) optoelektronische Elemente zur nicht bildhaften Erkennung des Bewegungsmusters aufweist und/oder innerhalb der Einrichtung zur Steuerung angeordnet ist und/oder dass der Austritt des Lichts aus der Lichtquelle in unmittelbarer Nähe des Sensors (7) angeordnet ist.

3. Einrichtung nach Anspruch 1 oder 2, **dadurch gekennzeichnet, dass** die Lichtquelle durch wenigstens eine LED, vorzugsweise durch mehrere reihenweise angeordnete LEDs (9-13) gebildet ist, die gegebenenfalls zugleich zumindest zeitweise ein Teil einer optischen Sensoreinheit (28) ist.

4. Einrichtung nach einem der vorhergehenden Ansprüche, **dadurch gekennzeichnet, dass** der Sensor (7) die Position und ggf. die Annäherung des Körpers (24) dreidimensional erfasst.

5. Einrichtung nach einem der vorhergehenden Ansprüche, **dadurch gekennzeichnet, dass** die Lichtquelle Leuchtmittel aufweist, die in unterschiedliche Richtungen wirken und/oder bezüglich ihrer Abstrahlrichtung untereinander verschachtelt sind, und dass die Steuermittel (34) die Leuchtmittel zur Nachführung in Richtung des detektierten Körpers (24) teilweise wirksam schalten.

6. Einrichtung nach einem der vorhergehenden Ansprüche, **dadurch gekennzeichnet, dass** der Lichtquelle ein Motor, vorzugsweise ein Stellmotor zugeordnet ist, den die Steuermittel (34) zur Nachführung der Lichtquelle in Richtung des detektierten Körpers (24) ansteuern.

7. Einrichtung nach einem der vorhergehenden Ansprüche, **dadurch gekennzeichnet, dass** eine Intensitätsregelung (31) zur Regelung der Intensität des von der Lichtquelle kommenden Lichts vorgesehen ist, die anspricht, wenn sich der Körper (24) dem sensoraktiven Bereich (18) nähert und einen vorbestimmten Wert (40) überschreitet, und die die Lichtquelle bei Überschreiten des vorbestimmten Wertes zumindest mit einer Teilleistung ansteuert, wobei die Intensitätsregelung die Leistung der Lichtquelle vorzugsweise so ansteuert, dass die Intensität bei Entfernung des Körpers (24) bis zur Maximalleistung ansteigt und bei weiterer Annäherung an den Sensor (7) zumindest bis zu einem Minimalwert oder bis zum Ausschalten sinkt.

8. Einrichtung nach einem der vorhergehenden Ansprüche, **dadurch gekennzeichnet, dass** eine Meldeeinrichtung zur akustischen Rückmeldung mit mindestens einem Ton oder Klangbild vorgesehen ist.

9. Verfahren zum Steuern einer Einrichtung zur Steuerung einer Beleuchtung, insbesondere für Fahrzeuginnenräume, wobei ein wenigstens eine Lichtquelle steuerndes Steuersignal in Abhängigkeit von einem von einem Sensor (7,28) gelieferten Sensorsignal (28a) in einer der Lichtquelle zugeordneten Steuereinheit (27) so erzeugt wird, dass zumindest die Bewegung eines Körpers (24) oder eines Teils des Körpers im sensoraktiven Bereich (18) des Sensors erfasst wird, und Steuermittel (34) die Lichtquelle in Abhängigkeit eines zumindest der Position des Körpers entsprechenden Sensorsignals (28a) der Bewegung des Körpers (24)nachführen, wobei der Sensor (7) ein Bewegungsmuster des Körpers erkennt und das Sensorsignal in Abhängigkeit des Bewegungsmusters erzeugt wird,
**dadurch gekennzeichnet, dass** das Sensorsignal in Abhängigkeit des Bewegungsmusters so erzeugt wird, dass die Steuermittel (34) infolge des Sensorsignals das Licht der Bewegung des Körpers in der Amplitude und in seiner Abstrahlrichtung auf den Körper richtungsabhängig nachführen.

10. Verfahren nach Anspruch 9, **dadurch gekennzeichnet, dass** die Steuermittel (34) die in unterschiedliche Richtungen wirkenden Leuchtmittel der Lichtquelle zur richtungsabhängigen Nachführung in Richtung des detektierten Körpers (24) teilweise wirksam schalten.

11. Verfahren nach Anspruch 9 oder 10, **dadurch gekennzeichnet, dass** benachbarte Leuchtmittelreihen gemeinsam, ggf. mit halber Intensität angesteuert werden.

12. Verfahren nach einem der Ansprüche 9 bis 11, **dadurch gekennzeichnet, dass** die Steuermittel (34) einen der Lichtquelle zugeordneten Motor, vorzugsweise einen Stellmotor zur richtungsabhängigen Nachführung der Lichtquelle in Richtung des detektierten Körpers (24) ansteuern.

13. Verfahren nach einem der Ansprüche 9 bis 12, **dadurch gekennzeichnet, dass**, wenn bei Annäherung des Körpers (24) an den sensoraktiven Bereich (18) des der Lichtquelle zugeordneten, optischen Sensors (7,28) der Wert der Positionsdetektion um mehr als einen vorbestimmten Wert von einer Mittelachse eines Positionsdetektionsbereichs (21) abweicht, dies als Bewegungsmuster erkannt wird und das Licht in die Richtung des Körpers (24) eingeschaltet oder ausgeschaltet wird.

14. Verfahren nach Anspruch 13, **dadurch gekennzeichnet, dass** die durch die Positionsdetektion des Körpers (24) bestimmte Lichtrichtung beibehalten wird, wenn keine Positionsänderung des Körpers mehr erfasst wird und/oder dass bei Überschreiten eines vorgegebenen Abstandes des Körpers (24) vom Sensor (7,28) die aktuelle Wirkrichtung fixiert wird.

15. Verfahren nach einem der Ansprüche 9 bis 14, **dadurch gekennzeichnet, dass** der Sensor (7,28) die Annäherung und die Position des Körpers (24) dreidimensional erfasst.

16. Verfahren nach einem der Ansprüche 9 bis 15, **dadurch gekennzeichnet, dass** eine Intensitätsregelung (31) anspricht, wenn als Bewegungsmuster erkannt wird, dass sich der Körper (24) dem sensoraktiven Bereich (18) nähert und das Sensorsignal (28a) einen vorbestimmten Wert überschreitet, und die Lichtquelle bei Überschreiten des vorbestimmten Wertes zumindest mit einer Teilleistung ansteuert, wobei die Intensitätsregelung (31) die Leistung vorzugsweise so ansteuert, dass die Intensität bei Entfernung des Körpers (24) bis zur Maximalleistung ansteigt und bei weiterer Annäherung an den Sensor bis zu einem Minimalwert bzw. bis zum Ausschalten sinkt, wobei vorzugsweise die Leistung beim ersten Annähern bis zum Minimalwert und erst bei einem weiteren Ännähern bis zum Ausschalten sinkt.

17. Verfahren nach einem der Ansprüche 9 bis 16, **dadurch gekennzeichnet, dass** der Sensor (7,28) folgendes Bewegungsmuster erkennt und die Steuereinheit (34) anhand dieses Bewegungsmusters die Einrichtung wie folgt ansteuert:
• Annähern des Körpers (24) und daraufhin Einschalten der Lichtquelle zumindest mit teilweiser Intensität,
• Entfernen des Körpers (24) und daraufhin ggf. Ansteigen der Intensität bei gleichzeitigem Dirigieren in Richtung des Körpers,
• Weiteres Entfernen des Körpers (24) unter Beibehalten der Intensität des Lichts in der gewünschten Position.

18. Verfahren nach einem der Ansprüche 9 bis 17, **dadurch gekennzeichnet, dass** der Sensor (7,28) zum Ausschalten der Einrichtung das Annähern des Körpers (24) erkennt und bei Unterschreiten eines vorbestimmten Abstandes, der maximal der Außengrenze des sensoraktiven Bereichs (18) entspricht, zwischen Körper und Sensor bei weiterem Annähern des Körpers (24) allmählich die Lichtquelle herunterschaltet oder herunterregelt, bis die Lichtquelle ggf. bei wiederholtem Annähern versiegt.

19. Verfahren nach einem der Ansprüche 9 bis 18, **dadurch gekennzeichnet, dass** bei einer Bewegung des Körpers (24) im sensoraktiven Bereich (18) mit gleichbleibendem Abstand zum Sensor das Licht mit gleichbleibender Intensität richtungsabhängig nachgeführt wird.

20. Verfahren nach einem der Ansprüche 9 bis 19, **dadurch gekennzeichnet, dass** zum allmählichen Nachführen der Lichtintensität die Steuereinheit (34), ausgehend von einem Zustand mit vorgegebener Intensität bei vorgegebener Position des Körpers (24), entweder die Intensität in der einen Richtung ändert, wenn sich der Körper (24) weiter nähert, oder in der anderen Richtung ändert, wenn sich der Körper (24) weiter entfernt, und dass die erreichte Intensität zumindest beibehalten wird, bis eine erneute Bewegung an der erreichten Intensität vorbei erfolgt.

21. Verfahren nach Anspruch 20, **dadurch gekennzeichnet, dass** unterhalb einer vorgegebenen Intensität das Licht nur noch weiter bis zum Ausschalten der Lichtquelle verringerbar ist.

22. Verfahren nach einem der Ansprüche 9 bis 21, **dadurch gekennzeichnet, dass** eine Meldeeinrichtung in Abhängigkeit der vom Sensor wahrgenommenen Bewegung, wenigstens einen Ton oder ein Klangbild erzeugt, wobei vorzugsweise verschiedene Klangbilder z.B. für das Ausschalten oder Einschalten der Lichtquelle oder für das Nachführen, Dimmen oder Regeln erzeugt werden.

## Claims

1. Device for controlling lighting, more especially for the interiors of automotive vehicles, comprising at least one light source, at least one sensor (7) which influences the light source and detects at least the movement of a body (24) or of a part of the body within the active region (18) of the sensor, as well as having a control unit (27) associated with the light source for controlling the light source in dependence on a sensor signal supplied by the sensor by means of control means (34), which track the light of the light source in dependence on a sensor signal, which corresponds at least to the position of the body (24), indicating the movement of the body, wherein the sensor (7) includes means for recognizing a movement pattern of the body, and in that means are provided for generating a sensor signal in dependence on the movement pattern,
**characterized in that**, on account of the sensor signal, the control means (34) track the light to the movement of the body in terms of amplitude and in its direction of radiation to the body dependent on direction.

2. Device according to claim 1, **characterized in that** the sensor (7) includes optoelectronic elements for non-image recognition of the movement pattern and/or is disposed inside the controlling device and/or **in that** the emergence of the light from the light source is disposed in the direct vicinity of the sensor (7).

3. Device according to claim 1 or 2, **characterized in that** the light source is formed by an LED, preferably by a plurality of LEDs (9-13) disposed in rows, which is, where applicable, at the same time at least at times a part of an optical sensor unit (28).

4. Device according to one of the preceding claims, **characterized in that** the sensor (7) detects the position and where applicable the proximity of the body (24) in a three-dimensional manner.

5. Device according to one of the preceding claims, **characterized in that** the light source includes lighting means, which work in various directions and/or which are nested together as regards their direction of radiation, and that the control means (34) partially activate the lighting means for tracking in the direction of the detected body (24).

6. Device according to one of the preceding claims, **characterized in that** a motor, preferably a setting motor, is associated with the light source, the control means (34) controlling said motor for tracking the light source in the direction of the detected body (24).

7. Device according to one of the preceding claims, **characterized in that** an intensity control (31) is provided for regulating the intensity of the light emitted from the light source, said intensity control responding when the body (24) approaches the active region (18) of the sensor and exceeds a predetermined value (40), and controlling the light source at least at partial output when the predetermined value is exceeded, wherein the intensity control controls the output of the light source in such a manner that the intensity increases to maximum output when the body (24) moves away and decreases to a minimum value or until it is deactivated when the body continues to approach the sensor (7).

8. Device according to one of the preceding claims, **characterized in that** an indicating device for acoustic acknowledgement is provided with at least one sound or acoustic pattern.

9. Method for controlling a device for controlling lighting, more especially for the interiors of automotive vehicles, wherein a control signal, controlling at least one light source, is generated in a control unit (27), associated with the light source, in dependence on a sensor signal (28a), supplied by a sensor (7, 28), in such a manner that at least the movement of a body (24) or of a part of the body in an active region (18) of the sensor is detected, and control means (34) track the light source in dependence on a sensor signal (28a) to the movement of the body (24) corresponding at least to the position of the body, wherein the sensor (7) recognizes a movement pattern of the body and the sensor signal is generated in dependence on the movement pattern,
**characterized in that** the sensor signal is generated in dependence on the movement pattern in such a manner that the control means (34) track the light to the movement of the body in terms of amplitude and in its direction of radiation according to direction on account of the sensor signal.

10. Method according to claim 9, **characterized in that** the control means (34) partially activate the lighting means of the light source, working in different directions, for the direction-dependent tracking in the direction of the detected body (24).

11. Method according to claim 9 or 10, **characterized in that** adjacent rows of lighting means are controlled together, where applicable at half intensity.

12. Method according to one of the claims 9 to 11, **characterized in that** the control means (34) control a motor, preferably a setting motor ,associated with the light source, for the direction-dependent tracking of the light source in the direction of the detected body (24).

13. Method according to one of the claims 9 to 12, **characterized in that** if when the body (24) approaches the active sensor region (18) of the optical sensor (7, 28), associated with the light source, the value of the positional detection deviates by more than a predetermined value from a central axis of a positional detection region (21), this is recognized as a movement pattern and the light is activated in the direction of the body (24) or is deactivated.

14. Method according to claim 13, **characterized in that** the light direction determined by the positional detection of the body (24) is retained if no more change in the position of the body is detected and/or when a predetermined distance between the body (24) and the sensor (7, 28) is exceeded, the current direction of operation is fixed.

15. Method according to one of the claims 9 to 14, **characterized in that** the sensor (7, 28) detects the proximity of and the position of the body (24) in a three-dimensional manner.

16. Method according to one of the claims 9 to 15, **characterized in that** an intensity control (31) responds when the body (24) approaching the active sensor region (18) is recognized as a movement pattern and the sensor signal (28a) exceeds a predetermined value, and the light source is operating with at least partial output when the predetermined value is exceeded, wherein preferably the intensity control (31) controls the output in such a manner that when the body (24) moves away the intensity increases to maximum output and when the body continues to approach the sensor the intensity decreases to a minimum value or respectively until it is deactivated, wherein preferably the output decreases to the minimum value on the first approach and is only deactivated if the approach continues.

17. Method according to one of the claims 9 to 16, **characterized in that** the sensor (7, 28) recognizes as movement pattern and the control unit (34) controls the device by way of this movement pattern as follows:
- approaching the body (24) and as a result activating the light source with at least partial intensity,
- moving away the body (24) and as a result, where applicable, increasing the intensity and directing at the same time the light in the direction of the body,
- continuous moving away the body (24) and retaining the intensity of the light in the desired position.

18. Method according to one of the claims 9 to 17, **characterized in that** the sensor (7, 28) recognizes the approaching of the body (24) for deactivating the device and where a predetermined distance between the body and the sensor is fallen below and when the body (24) continues to approach, said distance corresponding to a maximum of the active region (18) of the sensor, the light source is gradually turned down or regulated down until the light source is extinguished, where applicable when the body makes repeated approaches.

19. Method according to one of the claims 9 to 18, **characterized in that** where the body (24) makes a movement in the active region (18) of the sensor at a constant distance from the sensor, the light is tracked in a direction-dependent manner at constant intensity.

20. Method according to one of the claims 9 to 19, **characterized in that** for the gradual tracking of the light intensity, the control unit (34), proceeding from a condition at predetermined intensity with a predetermined position of the body (24), either changes the intensity in the one direction if the body continues to approach, or changes it in the other direction if the body (24) continues to move away, and **in that** the obtained intensity is retained at least until a new movement is made past the obtained intensity.

21. Method according to claim 20, **characterized in that** below a predetermined intensity, the light is only reducible until the light source is deactivated.

22. Method according to one of the claims 9 to 21, **characterized in that** an indicating device generates at least one sound or one acoustic pattern in dependence on the movement detected by the sensor wherein various acoustic patterns are generated, for example for deactivating or activating the light source or for tracking, dimming or regulating.

## Revendications

1. Dispositif de commande d'un éclairage, en particulier pour des habitacles de véhicules automobiles, comprenant au moins une source de lumière, au moins un détecteur (7) influençant la source de lumière, lequel détecte au moins le mouvement d'un corps (24) ou d'une partie du corps dans la zone de détection active du détecteur (18), ainsi qu'une unité de commande (27) associée à la source de lumière, pour commander la source de lumière en fonction d'un signal de détection fourni par le détecteur, au moyen de moyens de commande (34) qui adaptent la lumière de la source de lumière au mouvement du corps en fonction d'un signal de détection correspondant au moins à la position du corps (24), le détecteur (7) comportant des moyens d'identification d'un schéma de mouvement du corps et des moyens pour produire un signal de détection en fonction du schéma de mouvement, **caractérisé en ce que** les moyens de commande (34), suite au signal de détection, adaptent la lumière au mouvement du corps de manière directionnelle en amplitude et eu égard à la direction de son rayonnement frappant le corps.

2. Dispositif selon la revendication 1, **caractérisé en ce que** le détecteur optique (7) comporte des éléments optoélectroniques pour l'identification du schéma de mouvement ne procédant pas par image et/ou est situé à l'intérieur du dispositif de commande et/ou **en ce que** la sortie de la lumière provenant de la source de lumière est située à proximité immédiate du détecteur (7).

3. Dispositif selon la revendication 1 ou 2, **caractérisé en ce que** la source de lumière est constituée par au moins une LED, de préférence par plusieurs LED disposées en séries (9-13), laquelle est en même temps, le cas échéant, au moins temporairement une partie d'une unité de détection optique (28).

4. Dispositif selon l'une des revendications précédentes, **caractérisé en ce que** le détecteur (7) détecte en trois dimensions la position et, le cas échéant, le rapprochement du corps (24).

5. Dispositif selon l'une des revendications précédentes, **caractérisé en ce que** la source de lumière comporte des moyens d'éclairage qui agissent dans différentes directions et/ou sont entrelacés entre eux eu égard à la direction de leur rayonnement et **en ce que** les moyens de commande (34) activent partiellement les moyens d'éclairage pour adaptation en direction du corps détecté (24).

6. Dispositif selon l'une des revendications précédentes, **caractérisé en ce qu'**est associé à la source de lumière un moteur, de préférence un servomoteur que commandent les moyens de commande (34) pour adapter la source de lumière à la direction du corps détecté (24).

7. Dispositif selon l'une des revendications précédentes, **caractérisé en ce qu'**est prévu un réglage de l'intensité (31) pour régler l'intensité de la lumière provenant de la source de lumière, lequel réagit lorsque le corps (24) se rapproche de la zone de détection active (18) et dépasse une valeur prédéterminée (40) et qui, lors du dépassement de ladite valeur prédéterminée, commande la source de lumière au moins avec une puissance partielle, le réglage de l'intensité commandant la puissance de la source de lumière de préférence de manière telle que l'intensité augmente jusqu'à la puissance maximale lorsque le corps (24) s'éloigne et tombe au moins jusqu'à une valeur minimale ou jusqu'à extinction en cas de poursuite du rapprochement vers le détecteur (7).

8. Dispositif selon l'une des revendications précédentes, **caractérisé en ce qu'**est prévu un dispositif de signalisation pour réponse acoustique avec au moins un son ou une image sonore.

9. Procédé de commande d'un dispositif de commande d'un éclairage, en particulier pour des habitacles de véhicules automobiles, un signal de commande qui commande au moins une source de lumière étant, dans une unité de commande (27) associée à la source de lumière, généré, en fonction d'un signal de détection (28a) fourni par un détecteur (7, 28), de manière telle qu'au moins le mouvement d'un corps (24) ou d'une partie du corps est détecté dans la zone de détection active (18) du détecteur, et des moyens de commande (34) adaptant la source de lumière au mouvement du corps (24) en fonction d'un signal de détection (28a) correspondant au moins à la position du corps, le détecteur (7) identifiant un schéma de mouvement du corps et le signal de détection étant généré en fonction du schéma de mouvement, **caractérisé en ce que** le signal de détection est généré en fonction du schéma de mouvement de manière telle que les moyens de commande (34), suite au signal de détection, adaptent la lumière au mouvement du corps de manière directionnelle en amplitude et eu égard à la direction de son rayonnement frappant le corps.

10. Procédé selon la revendication 9, **caractérisé en ce que** les moyens de commande (34) activent partiellement les moyens d'éclairage de la source d'éclairage, qui agissent dans différentes directions, pour adaptation directionnelle à la direction du corps détecté (24).

11. Procédé selon la revendication 9 ou 10, **caractérisé en ce que** des séries de moyens d'éclairage voisines sont commandées en commun, le cas échéant à demi-intensité.

12. Procédé selon l'une des revendications 9 à 11, **caractérisé en ce que** les moyens de commande (34) commandent un moteur associé à la source de lumière, de préférence un servomoteur pour l'adaptation directionnelle de la source de lumière à la direction du corps détecté (24).

13. Procédé selon l'une des revendications 9 à 12, **caractérisé en ce que**, si la valeur de la détection de position s'écarte d'un axe médian d'une zone de détection de position (21) de plus d'une valeur prédéterminée lorsque le corps (24) se rapproche de la zone de détection active (18) du détecteur optique (7, 28) associé à la source de lumière, ceci est identifié en tant que schéma de mouvement et la lumière allant dans la direction du corps (24) s'allume ou s'éteint.

14. Procédé selon la revendication 13, **caractérisé en ce que** la direction de la lumière déterminée par la détection de la position du corps (24) est maintenue lorsque plus aucune modification de la position du corps n'est détectée et/ou **en ce que** la direction actuelle de l'action est fixée lorsqu'il y a dépassement d'une distance donnée entre le corps (24) et le détecteur (7, 28).

15. Procédé selon l'une des revendications 9 à 14, **caractérisé en ce que** le détecteur (7, 28) détecte en trois dimensions le rapprochement et la position du corps (24).

16. Procédé selon l'une des revendications 9 à 15, **caractérisé en ce qu'**un réglage d'intensité (31) réagit lorsqu'est identifié, en tant que schéma de mouvement, le fait que le corps (24) se rapproche de la zone de détection active (18) et lorsque le signal de détection (28a) dépasse une valeur prédéterminée, et, au dépassement de la valeur prédéterminée, commande la source de lumière au moins avec une puissance partielle, le réglage d'intensité (31) commandant la puissance de préférence de manière telle que l'intensité augmente jusqu'à la puissance maximale lorsque le corps (24) s'éloigne et tombe jusqu'à une valeur minimale resp. jusqu'à extinction en cas de poursuite du rapprochement vers le détecteur, la puissance, de préférence, tombant jusqu'à la valeur minimale au premier rapprochement et ne tombant jusqu'à extinction qu'en cas de rapprochement supplémentaire.

17. Procédé selon l'une des revendications 9 à 16, **caractérisé en ce que** le détecteur (7, 28) identifie le schéma de mouvement suivant et l'unité de commande (34), à l'aide de ce schéma de mouvement, commande le dispositif comme suit:
• rapprochement du corps (24), et ensuite mise en marche de la source de lumière au moins avec une intensité partielle;
• éloignement du corps (24), et ensuite, le cas échéant, augmentation de l'intensité avec guidage simultané dans la direction du corps;
• poursuite de l'éloignement du corps (24) avec maintien de l'intensité de la lumière dans la position souhaitée.

18. Procédé selon l'une des revendications 9 à 17, **caractérisé en ce que** le détecteur (7, 28), pour couper le dispositif, identifie le rapprochement du corps (24) et, en cas de dépassement par le bas d'une distance prédéterminée entre le corps et le détecteur, laquelle correspond au maximum à la limite extérieure de la zone de détection active (18), baisse, lorsque le corps (24) continue de se rapprocher, peu à peu la source de lumière par commutation ou par réglage jusqu'à ce que la source de lumière s'éteigne, le cas échéant en cas de rapprochement répété.

19. Procédé selon l'une des revendications 9 à 18, **caractérisé en ce que**, dans le cas d'un mouvement du corps (24) dans la zone de détection active (18) avec un écart constant par rapport au détecteur, la lumière est adaptée de manière directionnelle avec une intensité constante.

20. Procédé selon l'une des revendications 9 à 19, **caractérisé en ce que**, pour l'adaptation progressive de l'intensité de la lumière, l'unité de commande (34), partant d'un état avec une intensité donnée, la position du corps (24) étant donnée, soit modifie l'intensité dans une direction lorsque le corps (24) continue de se rapprocher soit la modifie dans l'autre direction si le corps (24) continue de s'éloigner, et **en ce que** l'intensité atteinte est au moins maintenue jusqu'à ce que se produise un nouveau mouvement allant outre l'intensité atteinte.

21. Procédé selon la revendication 20, **caractérisé en ce que**, en deçà d'une intensité donnée, la lumière ne peut plus être réduite que jusqu'à l'extinction de la source de lumière.

22. Procédé selon l'une des revendications 9 à 21, **caractérisé en ce qu'**un dispositif de signalisation génère au moins un son ou une image sonore en fonction du mouvement perçu par le détecteur, de préférence différentes images sonores étant produites par exemple pour l'extinction ou la mise en marche de la source de lumière ou pour l'adaptation, la variation de la lumière ou le réglage.
